# EUROPEAN PATENT APPLICATION

(11) **EP 4 043 146 A1**
(43) Date of publication of application: **17.08.2022**
(21) Application number: 22156150.9
(22) Date of filing: 10.02.2022
(51) Int. Cl.: B23Q 39/04, B23B 3/32, B23Q 39/00, B23Q 1/01

(54) **A NUMERICALLY CONTROLLED MULTI-SPINDLE LATHE WITH LATHE AXES LYING ON A HORIZONTAL PLANE**

(30) Priority: 15.02.2021 IT 202100003338
(71) Applicant: PAOLINO BACCI S.R.L., 56021 Cascina (PI) (IT)
(72) Inventor: BACCI, Giuseppe, 56025 Pontedera (Pi) (IT); BACCI, Nino, 56025 Pontedera (Pi) (IT); BACCI, Paolo, 56025 Pontedera (Pi) (IT)
(74) Representative: Mannucci, Michele

(57) **Abstract**

The lathe comprises a load-bearing structure (3) having a bed (9) extending according to a first translation axis (X). Headstocks and tailstocks are configured to support a plurality of workpieces to be machined simultaneously. The lathe comprises: a gantry structure (23) and a carriage (25), supported by the gantry structure (23) and movable with respect thereto, by means of guides (27), in the direction of a second translation axis (Y), orthogonal to a first translation axis (X) along which the gantry structure and the pairs of headstocks and tailstocks translate with respect to each other. A plurality of spindles (31) carried by the second carriage (25) are configured to simultaneously machine a plurality of workpieces (P).

## Description

### TECHNICAL FIELD

The present invention relates to the field of machine tools. More in particular, the invention relates to the field of numerically controlled lathes.

### BACKGROUND ART

To produce elongated workpieces, such as furniture or other components, made of wood, plastic, light alloys or the like, the use of numerically controlled lathes and copy lathes is known. In particular, for the production of furniture components, such as chair and table legs, multi-spindle copy lathes are known, in which it is possible to simultaneously machine a plurality of workpieces supported by a plurality of headstocks and tailstocks. The tools that machine the plurality of workpieces in parallel are controlled by a template, which reproduces the shape of the workpiece to be produced.

These machines are reliable and precise, but have limits deriving from the fact that they are copy machines, i.e., that they require the use of templates, which reproduce the shape of the finished workpiece.

It would be useful to have a multi-spindle lathe that can produce, in a flexible manner and with high productivity and precision, workpieces currently produced using copy lathes.

### SUMMARY

According to an aspect, to entirely or partly solve the problems of prior art lathes, a numerically controlled multi-spindle lathe is provided, comprising a bed and a plurality of pairs of rotation members adapted to support and rotate workpieces to be machined. Each pair comprises a headstock and a tail stock coaxial with each other and defining a respective rotation axis of the workpieces to be machined. Each headstock is motorized and the distance between headstocks and tailstocks is adjustable. The rotation axes of the pairs of headstocks and tailstocks lie on a horizontal plane.

The lathe further comprises a gantry structure (hereinafter also called "gantry" for brevity) for supporting a plurality of spindles adapted to rotate, about respective rotation axes of the spindles, respective tools configured to simultaneously machine workpieces mounted between the headstocks and the tailstocks. The gantry structure has a generally horizontal cross member and generally vertical uprights.

The pairs of headstocks and tailstocks and the gantry structure are provided with a numerically controlled movement with respect to each other by means of first guides along a first translation axis, which is horizontal and parallel to the rotation axes of the pairs of headstocks and tailstocks. The gantry structure comprises a pair of uprights and a cross member extending crosswise to the rotation axes of the headstocks and tailstocks and positioned above a plane on which said axes lie.

The lathe further comprises a carriage that carries the spindles and which is supported by the gantry structure. The carriage is movable with a numerically controlled movement with respect to the gantry structure by means of second guides, along a second, vertical translation axis.

In the context of the present description and of the appended claims, "vertical" is meant as an orientation parallel to the direction of the force of gravity and "horizontal" is meant as an orientation orthogonal to the vertical orientation, hence an orientation at 90° with respect to the direction of the force of gravity.

In currently preferred embodiments, the gantry structure configures a carriage or slide, i.e., is movable with respect to the bed. In this case, the gantry structure carries out the translation movement according to the numerically controlled axis parallel to the axis of the headstocks and tailstocks.

In this embodiment, the numerically controlled multi-spindle lathe comprises a bed with an upper face and two lateral faces. The lathe further comprises a plurality of pairs of rotation members adapted to support and rotate workpieces to be machined; each pair comprises a headstock and a tailstock coaxial with each other and defining a respective rotation axis of the workpieces to be machined. The headstocks are motorized and the distance between headstocks and tailstocks is adjustable as a function of the axial dimension of the workpieces to be machined. The rotation axes of the pairs of headstocks and tailstocks lie on a horizontal plane. The lathe further comprises a first carriage, configured by the gantry structure, guided on first guides integral with the bed and extending according to a first translation axis, horizontal and parallel to the rotation axes of the pairs of headstocks and tailstocks. The first carriage is provided with a numerically controlled movement along the first translation axis to carry out machining operations on the workpieces supported and rotated about the axes of the headstocks and tailstocks. The lathe comprises a second carriage, supported by the first carriage and movable with a numerically controlled movement with respect to the first carriage, by means of second guides, in the direction of a second, vertical translation axis. The lathe comprises a plurality of spindles whose rotation axes are configured to be able to be arranged parallel to one another and parallel to the rotation axes of the headstocks and tailstocks, on a horizontal plane parallel to the rotation axes of the headstocks and tailstocks. The spindles are carried by the second carriage, and configured to rotate tools adapted to simultaneously machine workpieces mounted between the headstocks and the tailstocks.

In other embodiments, the gantry structure does not configure a movable slide or carriage, but is stationary, i.e., fixed with respect to the bed. In this case, the movement along the numerically controlled axis parallel to the axes of the headstocks and tailstocks is attributed to a slide, movable on the bed, on which the headstocks and tailstocks are carried.

In particularly advantageous embodiments, to simplify the structure, the rotation axes of the spindles have a fixed orientation and all the axes lie on a horizontal plane parallel to the plane on which the rotation axes of the pairs of headstocks and tailstocks lie. Nonetheless, it would also be possible to provide a more complex lathe, with greater operating flexibility, in which each spindle is pivotable, i.e., orientable, about a horizontal axis perpendicular to the rotation axis of the headstocks and tailstocks. In this way, the rotation axis of each spindle can be arranged on a vertical plane orthogonal to the plane on which the rotation axes of the headstocks and tailstocks lie, forming an angle with the direction of orientation of said rotation axes of the headstocks and tailstocks.

The rotation axes of the spindles can in this way be inclined toward the workpieces to be machined, so as to be able to use tools of smaller diameter without the risk of collision between spindle and workpiece being machined. This is due to the fact that the axis of the spindles is inclined to move the respective tools toward the workpieces being machined.

In general, the spindles are adapted to carry out identical or symmetrical machining operations on the various workpieces supported by the pairs of headstocks and tailstocks.

Therefore, if the spindles of the tools are provided with a pivoting movement on a vertical plane to adopt variable angles with respect to the rotation axes of the headstocks and tailstocks, in general all the spindles will adopt, in a given machining cycle, the same inclination. Therefore, in general they will remain parallel to one another.

To promote and simplify chip collection during machining, the lathe can comprise, associated with the bed, a conveyor for collecting the chips generated by machining of the workpieces. The conveyor can be arranged on the upper face of the bed, for example can be housed in a cavity produced on said upper face of the bed.

Further features and advantageous embodiments are described below and defined in the appended claims, which form an integral part of the present description.

### BRIEF DESCRIPTION OF THE DRAWINGS

The invention will be better understood by following the description and accompany drawings, which illustrate non-limiting exemplary embodiments of the invention. More in particular, in the drawing:
Fig.1 shows a side view, according to I-I of Fig.2, of a further embodiment of a multi-spindle lathe;
Fig.2 shows a section according to II-II of Fig.1;
Fig.3 shows a plan view according to III-III of Fig.1;
Figs. 4 and 5 show views analogous to Figs.2 and 3 in a variant of embodiment of the lathe of Figs. 1 to 3;
Fig.6 shows a side view according to the line VI-VI of Fig.7 of a further embodiment;
Fig. 7 shows a plan view according to the line VII-VII of Fig.6; and
Fig.8 shows a side and partially sectional view according to VIII-VIII of Fig.9 of a further embodiment;
Fig.9 shows a section according to IX-IX of Fig.8; and
Fig.10 shows a partially sectional view according to X-X of Figs. 8 and 9.

### DETAILED DESCRIPTION

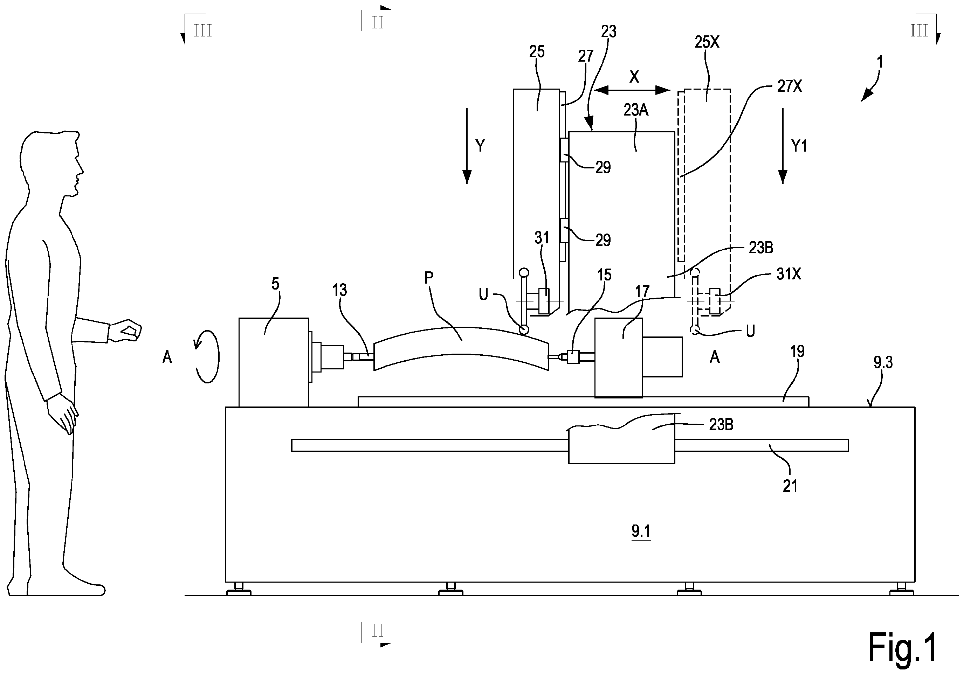

Figs. 1, 2 and 3 show an embodiment of a multi-spindle lathe 1. The lathe 1 of Figs. 1 to 3 comprises a horizontally extending bed 9 , on which headstocks 13, tailstocks 15 and spindles 31 for machining tools U are positioned.

More in particular, in the embodiment of Figs. 1 to 3 the headstocks 13 are carried directly on the bed 9 and are preferably stationary with respect thereto, i.e., each rotates about its own horizontal axis A, but do not translate with respect to the bed 9.

Each headstock 13 is associated with a tailstock 15. Each headstock 13 and respective tailstock 15 are coaxial to one another. The letter A indicates the rotation axes of the pairs of headstocks 13 and tailstocks 15, which define the members for supporting and rotating workpieces P to be machined. The axes A lie on a horizontal plane.

Each headstock 13 is driven into rotation about the respective axis A by means of a numerically controlled motor, not shown. The motors of the headstocks 13 are preferably controlled so that all the headstocks 13 carry out synchronous rotations. In this way, a plurality of supported tools U can synchronously and simultaneously machine all the workpieces P supported and rotated by the pairs of headstocks and tailstocks 13, 15.

In Figs. 1 to 3 the tools U, and hence the spindles 31 that support them, are arranged so that machining of the workpieces P takes place by rotating the spindles 31 and the respective tools U about axes parallel to the rotation axes A of the headstocks 13 and tailstocks 15, i.e., horizontal axes parallel to a first translation axis X and orthogonal to a second translation axis Y, described in greater detail below, along which the tools U can move.

In advantageous embodiments, the tools U are movable along only two numerically controlled axes X and Y, which simplifies the structure of the machine tool with respect to more complex existing structures, in which the tools and the workpieces to be machined must be mutually translated along three numerically controlled translation axes parallel to one another.

The translation axes X and Y are preferably rectilinear translation axes.

In the embodiment of Figs. 1 to 3 the tailstocks 15 are carried by a bearing structure that allows their movement in a direction parallel to the translation axis X, to adjust the distance between headstocks 13 and tailstocks 15. Vice versa, the headstocks 13 are arranged fixed with respect to the bed 9, for example on a cross member 5 fixed with respect to the bed 9 and parallel to the plane on which the axes A lie.

In the embodiment of Figs. 1 to 3, the bearing structure on which the tailstocks 15 are mounted comprises a cross member 17 orthogonal to the horizontal translation axis X and to the vertical translation axis Y. The cross member 17 is movable along adjustment guides 19, integral with the bed 9 and extending in the direction of extension of the bed 9 and parallel to the horizontal translation axis X, as well as parallel to the rotation axes A of the pairs of headstocks 13 and tailstocks 15. In this way, it is possible to adjust the distance between all the headstocks 13 and the respective tailstocks 15 as a function of the length of the workpieces P to be machined. It would also be possible to arrange the headstocks 13 on the cross member 17 and the tailstocks 15 on the cross member 5, although this configuration is less advantageous, as it requires the drive motors of the headstocks 13 to be positioned on the movable cross member 17 rather than on the fixed cross member 5.

The bed 9 can comprise two lateral walls or faces, respectively a face 9.1 and a face 9.2, opposite each other. The bed 9 can further comprise an upper face 9.3. Guides 21, which extend according to the first direction of translation, i.e., according to the first numerically controlled horizontal translation axis indicated by the double arrow X, can be attached to the faces 9.1 and 9.2 parallel to each other. Advantageously, a guide 21 can be provided on each of the two faces 9.1 and 9.2.

In advantageous embodiments, a gantry structure that configures a first carriage or slide 23 is engaged with the guides 21. In the embodiment of Figs. 1 to 2, the gantry structure 23 is movable with respect to the bed 9 and hence will also be named "carriage 23" or "first carriage 23" for brevity. More precisely, the gantry structure (which in this advantageous embodiment is movable) forming the carriage or slide 23 can comprise a cross member 23A, which extends above the bed 9 and crosswise thereto, i.e., orthogonally to the lateral faces 9.1 and 9.2, orthogonally to the rotation axes A of the headstocks 13 and tailstocks 15 and positioned above the plane on which the rotation axes A lie.

The gantry forming the carriage 23 can further comprise two uprights 23B, which can be positioned alongside the faces 9.1 and 9.2 of the bed 9, engaging with the guides 21 by means of suitable shoes. The first carriage 23 is movable along the guides 21 according to the first horizontal translation axis X. The movement of the first carriage 23 along the axis X is a numerically controlled movement.

In some embodiments, the first carriage 23 carries a second carriage or slide 25, which is movable along a second numerically controlled translation axis, represented by the double arrow Y. The second translation axis Y is vertical and orthogonal to the first translation axis X. To allow the movement along the second translation axis Y, the second carriage 25 can be provided with second guides 27, which engage in shoes 29 integral with the first carriage 23, or vice versa.

Spindles 31, to which tools U can be attached, are carried on the second carriage 25. The number of spindles 31 and the number of tools U can be the same as the number of pairs of headstocks 13 and tailstocks 15. In the example illustrated in Figs. 1 to 3, four pairs of headstocks 13 and tailstocks 15 and four spindles 31 are provided. The spindles 31 can be rotated simultaneously by means of motors in the same or in a different number to the number of spindles 31. In some embodiments, two adjacent pairs of headstocks 13 and tailstocks 15 can rotate in opposite directions.

The spindles 31 can be movable integral with one another, as they are all mounted directly on the carriage 25, so that the numerically controlled movement along the translation axis Y is carried out simultaneously by all the tools U mounted on the spindles 31. This allows a high productivity with a machine having a simple structure, capable of machining a plurality of workpieces P in parallel and simultaneously.

Due to the movements on the numerically controlled translation axes X and Y, the tools U can carry out numerically controlled movements along the axis X to machine each point of the workpieces P held between the headstocks 13 and the tailstocks 15. The numerically controlled movement along the translation axis Y allows the tools U to move toward and away from the lateral surfaces to be machined of the workpieces P held between headstocks 13 and tailstocks 15.

The structure of the lathe of the embodiment illustrated in Figs. 1 to 3 is particularly rigid and is able to withstand high inertial stresses, so that the movements along X and along Y can be carried out at high speeds. In particular, the use of a first carriage 23 in the form of a movable gantry makes it possible to avoid deformations resulting from inertial forces that develop during the movements along Y with high accelerations. A similar rigidity is obtained with respect to the forces of inertia according to X. This allows the lathe 1 to machine the workpieces P with high speed, due to the possibility of performing very high accelerations in the directions X and Y without deformations that cause errors or imprecisions in machining.

In advantageous embodiments, the lathe 1 can comprise a conveyor 43 for removing chips generated during machining. The conveyor 43 can have an active upper branch that moves parallel to the axis X and can be housed in a seat or cavity 9.4 provided in the upper face 9.3 of the bed, between the guides 19.

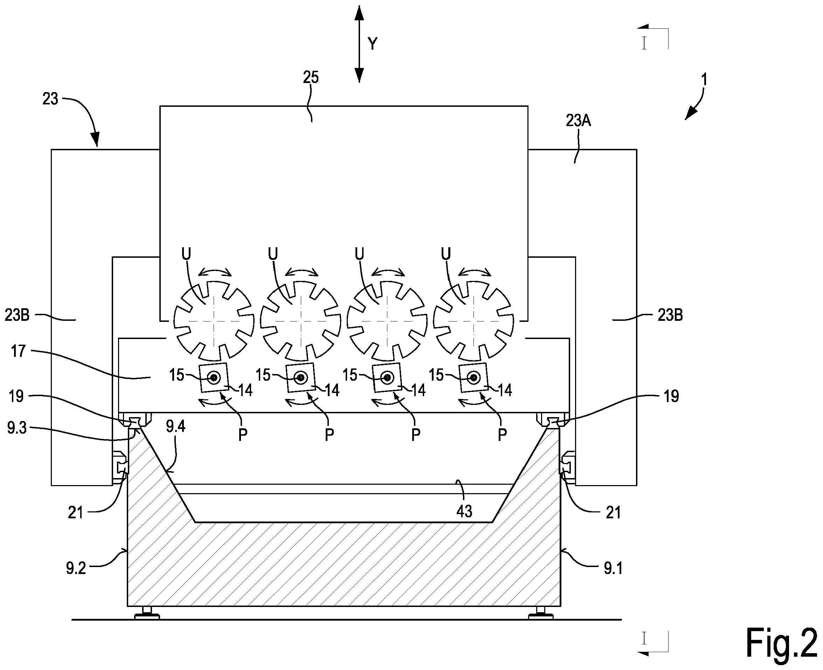

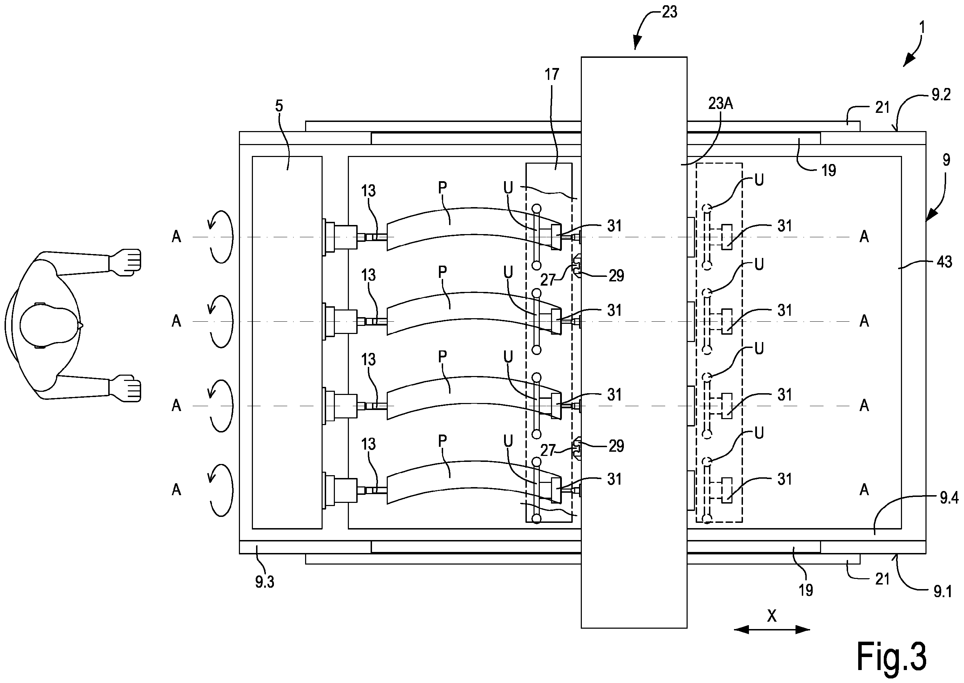

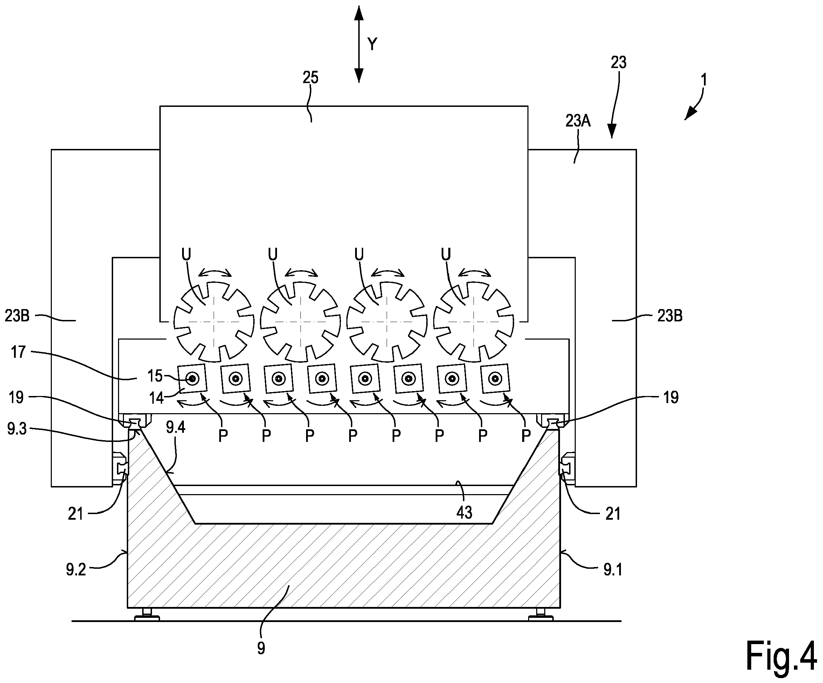

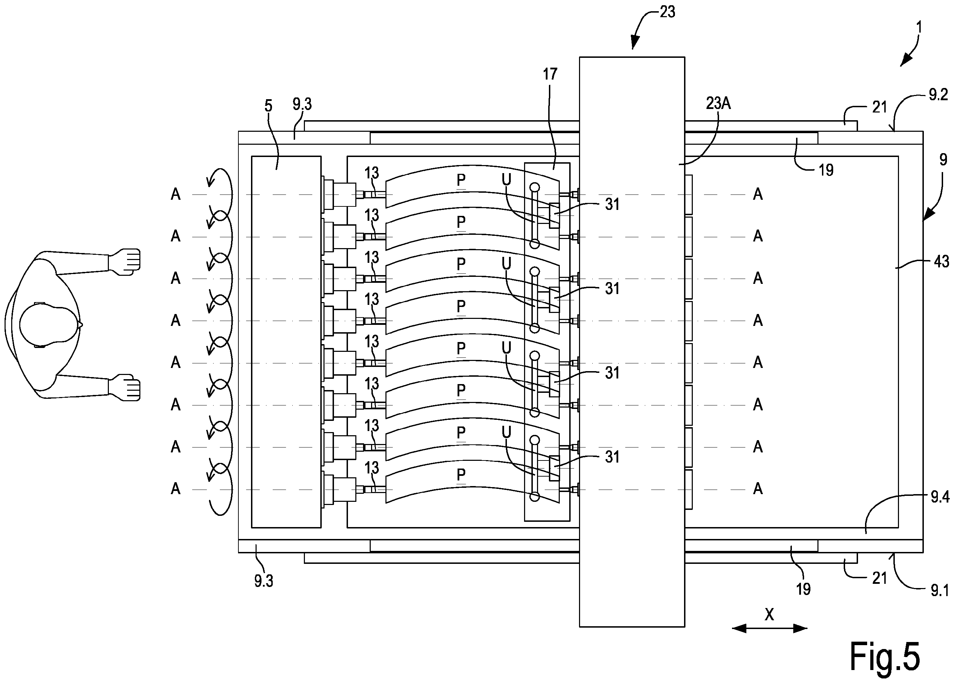

A further embodiment of the lathe according to the invention is illustrated in Figs. 4 and 5, which show views similar to the views of Figs. 2 and 3. The lathe 1 of Figs. 4 and 5 differs, with respect to the lathe 1 of Figs. 1 to 3, mainly in that the number of pairs of headstocks 13 and tailstocks 15 is twice the number of tools U and spindles 31. In Figs. 4 and 5, workpieces P to be machined are mounted on the lathe 1 in twice the number of the tools U and the distance between centers of the workpieces P being machined is such that the same tool U can simultaneously machine two workpieces P side by side.

In practice, the dimension of the tools U, for example their diameter with respect to the distance between the axes A of the pairs of headstocks and tailstocks, is such that each tool can be positioned in an intermediate position between two adjacent or consecutive axes A, to simultaneously machine the two workpieces P supported by the adjacent pairs of headstocks 13 and tailstocks 15. In this way, a double productivity of the lathe 1 is obtained, which can advantageously be used to machine workpieces P with small radial dimensions.

Advantageously, as indicated by the arrows in Fig.4, adjacent workpieces P can rotate in opposite directions.

In general, it is possible for the drive motors of the headstocks to be controlled to carry out any type of rotation, in concordant or discordant directions, of the adjacent headstocks.

In principle, if the workpieces to be machined are the same or symmetrical, the rotations of the headstocks will be at the same speed and in concordant or discordant directions. This is also the case in the configurations illustrated in the other figures.

The lathe 1 of Figs. 4 and 5 can also be used to machine a number of workpieces identical to the number of tools U and of larger dimensions, for example as shown in Figs. 1 to 3. For this purpose, the mutual position between the pairs of headstocks 13 and tailstocks 15 and the spindles 31 can be adjustable in a horizontal direction, orthogonal to the axes X and Y, i.e., parallel to the longitudinal extension of the cross member 23A. For this purpose, the spindles 31 can, for example, be mounted on the carriage 25 indirectly, through a slide movable horizontally in a direction orthogonal to the axis X, i.e., parallel to the cross member 23A.

Alternatively, the headstocks 13 and the tailstocks 15 can have an adjustment movement with respect to the bed 9, orthogonal to the axes X and Y. This adjustment movement can be a numerically controlled movement, or a simpler movement, with an actuator that translates the tools and/or the spindles with respect to one another in the adjustment direction between a first position and a second position.

Regardless of the type of mechanical member that carries out the adjustment movement, in this way it is possible to arrange the axes of the spindles 31 in two different positions with respect to the rotation axes A of the headstocks 13 and tailstocks 15. In a first position each rotation axis of the spindles 31 lies approximately on a vertical plane containing the rotation axis of a corresponding pair of headstocks 13 and tailstocks 15; in the second position the rotation axis of each spindle 31 is positioned (as shown in Fig.4) on a vertical plane interposed between the rotation axes A of two adjacent pairs of headstocks 13 and tailstocks 15. In the first position each tool machines a single workpiece as in the lathe of Fig.2 and half of the pairs of headstocks 13 and tailstocks 15 are idle. In the second position, as described above and as shown in Fig.4, each tool U simultaneously machines two workpieces P rotated by two adjacent pairs of headstocks 13 and tailstocks 15.

In both the embodiments of Figs. 1 to 5, a third carriage 25X can be provided mounted on the cross member 23A of the carriage 23, on the side opposite to the carriage 25. The carriage 25X can be movable, by means of guides 27X, according to a numerically controlled translation axis Y1, parallel to the numerically controlled translation axis Y. Reference 31X indicates further spindles carried by the third carriage 25X, the rotation axes whereof are parallel to the rotation axes of the spindles 31 and to the rotation axes A of the headstocks 13 and of the tailstocks 15.

The carriage 25X and the respective spindles 31X and tools U are indicated with dashed lines, to indicate their optional nature and only in Figs. 1 to 3.

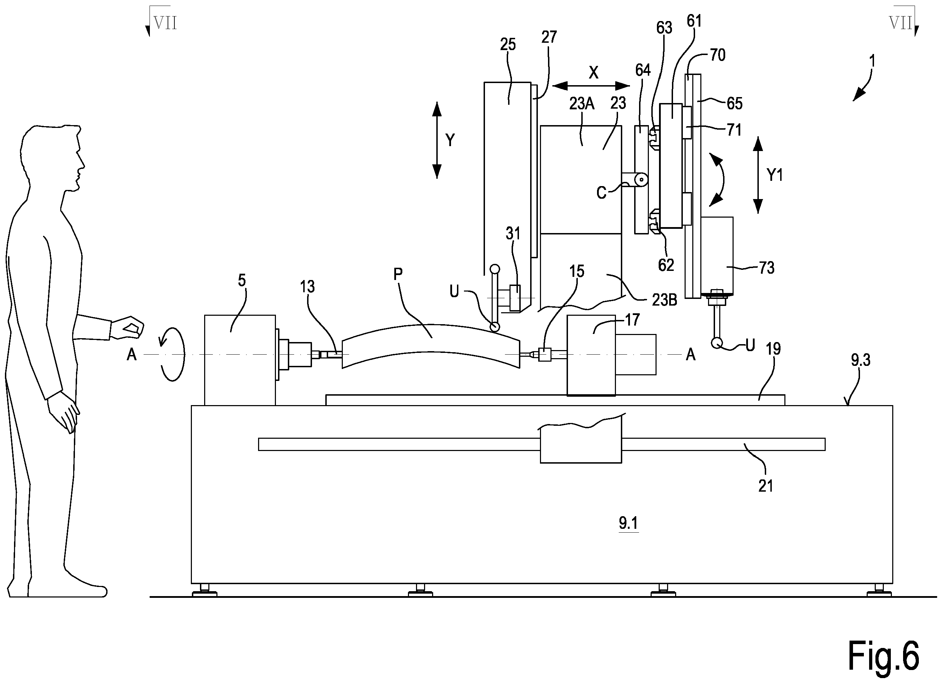

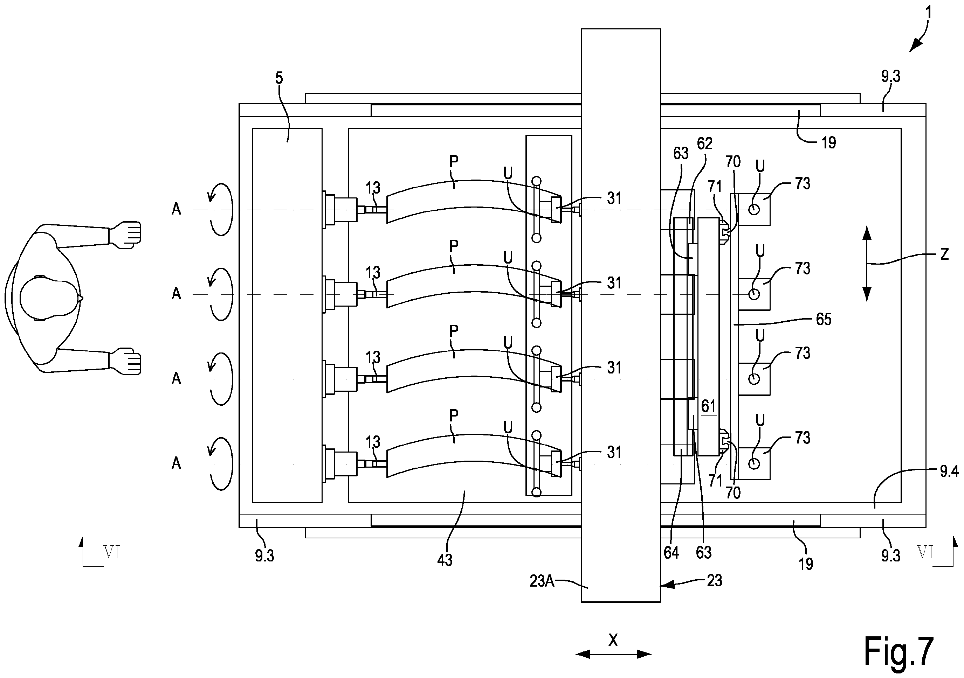

Figs. 6 and 7 show a further embodiment of a multi-spindle lathe 1. The same numbers indicate the same parts or parts equivalent to those of Figs. 1 to 3. The structure of the multi-spindle lathe 1 of Figs. 6 and 7 is the same as that of Figs. 1 to 3, but has a further third carriage indicated in this case with 61. The third carriage 61 is mounted on the bearing structure 23 so as to pivot with respect thereto about an axis C parallel to the longitudinal extension of the cross member 23A. In the embodiment illustrated, the carriage 61 is movable in a direction parallel to the pivot axis C and hence orthogonally to the numerically controlled translation axes X and Y, i.e., parallel to the cross member 23A. The movement can be obtained by means of shoes 63 integral with the carriage 61 and engaged in guides 62 integral with a support 64 hinged to the cross member 23A about the axis C, or vice versa.

Moreover, a slide 65 with guides 70 engaged with shoes 71 integral with the carriage 61 can be mounted on the carriage 61. The slide 65 is movable according to a numerically controlled translation axis Y1 parallel to the numerically controlled translation axis Y. Spindles 73 are mounted on the slide 65.

In this embodiment, the tools U carried by the slide 65 have a rotation axis parallel to the translation axis Y1 and to the translation axis Y, and hence orthogonal to the rotation axes A of the workpieces P to be machined.

In yet other embodiments, a configuration similar to that of Figs. 6 and 7 can be provided, but without the rotation axis C.

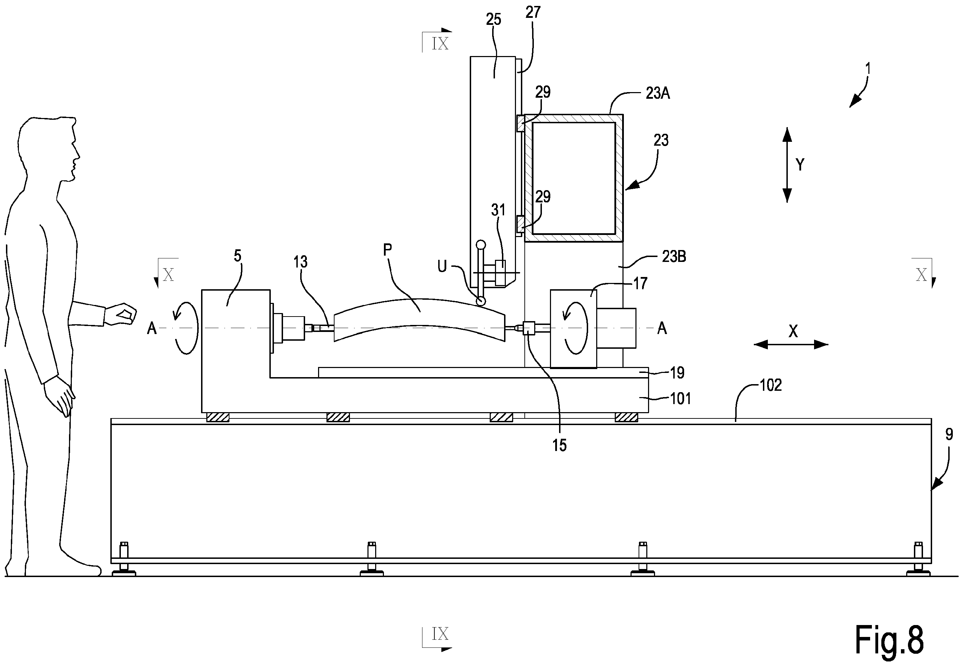

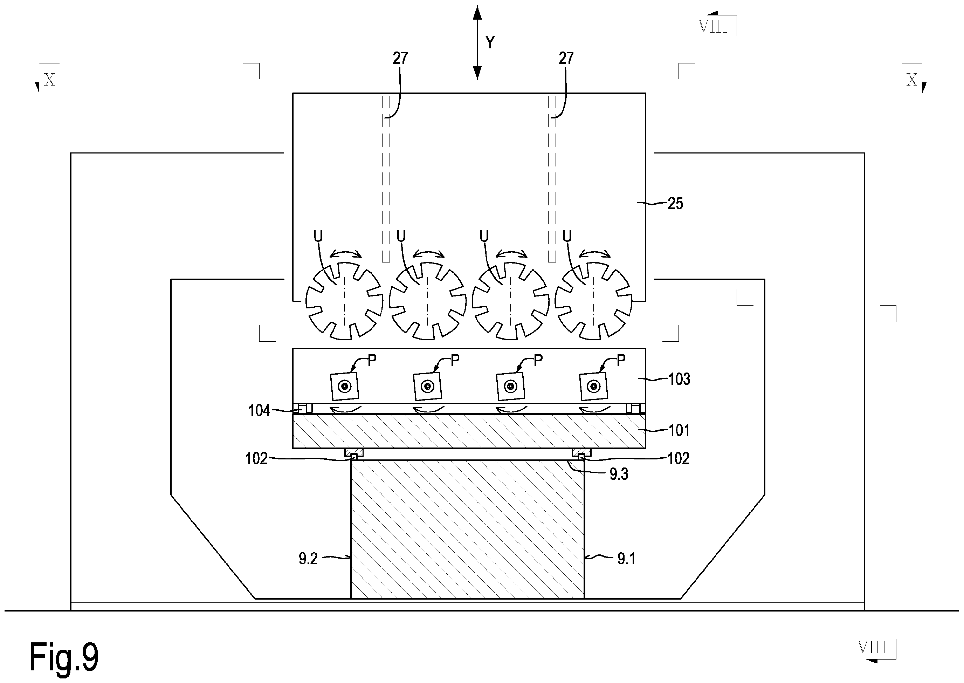

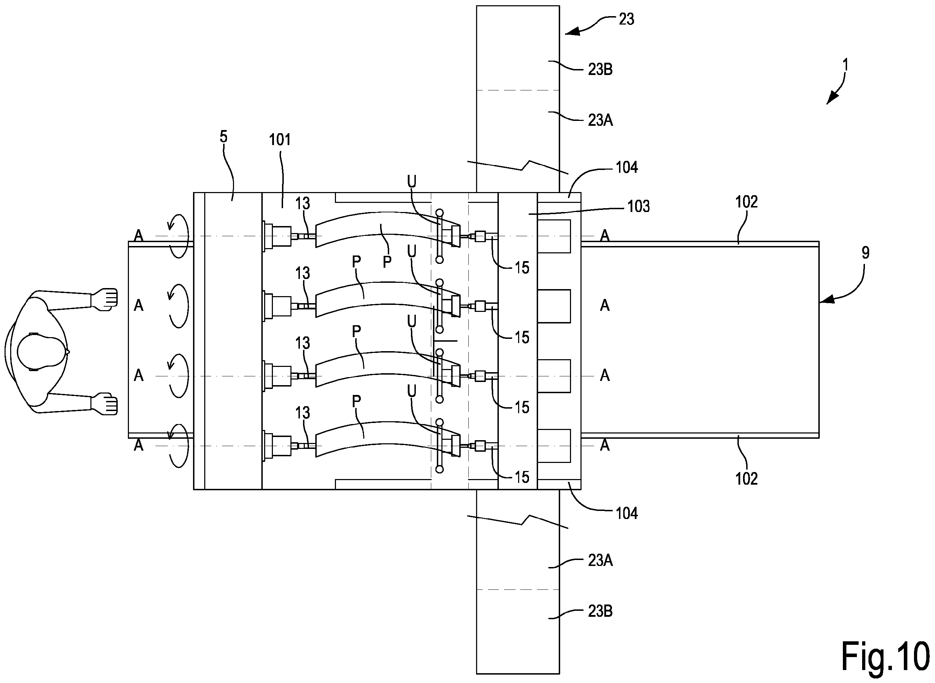

Figs. 8, 9 and 10 show a further embodiment of a multi-spindle lathe 1. The same numbers indicate the same parts or parts equivalent to those already described with reference to Figs. 1 to 3. Similarly to what has been described above with reference to the preceding figures, the lathe 1 of Figs. 8 to 10 comprises a bed 9 extending horizontally on which headstocks 13, tailstocks 15 and spindles 31 for machining tools U are positioned.

More in particular, in the embodiment of Figs. 8 to 10 the headstocks 13 are carried by a slide 101 that slides along guides 102 integral with the bed 9, for example with an upper face 9.3 of the bed 9. The headstocks 13 are preferably stationary with respect to the slide 101, i.e., each rotates about its own horizontal axis A, but does not translate with respect to the slide 101. Instead, this latter translates with respect to the bed 9 along the guides 102 according to a numerically controlled horizontal axis X.

Each headstock 13 is associated with a tailstock 15. Each headstock 13 and respective tailstock 15 are coaxial with each other. The reference A indicates the rotation axes of the pairs of headstocks 13 and tailstocks 15, which define members for supporting and rotating workpieces P to be machined. The axes A lie on a horizontal plane.

Each headstock 13 is rotated about the respective axis A by means of a numerically controlled motor, not shown. The motors of the headstocks 13 are preferably controlled so that all the headstocks 13 perform synchronous rotations. In this way, a plurality of supported tools U can synchronously and simultaneously machine all the workpieces P supported and rotated by the pairs of headstocks and tailstocks 13, 15.

In the embodiment of Figs. 8 to 10 the tailstocks 15 are carried by a cross member 103 mounted on the slide 101 and sliding along guides 104, to adjust the distance between headstocks 13 and tailstocks 15. In practice, the cross member 103 performs the function of the cross member 17. As described previously, it would also be possible for the headstocks 13 to be arranged on a cross member adjustable along the slide 101 and the tailstocks 15 to be fixed with respect to the slide 101, although this configuration is less advantageous.

In Figs. 8 to 10 the tools U, and hence the spindles 31 that carry them, are arranged so that machining of the workpieces P takes place by rotating the spindles 31 and the respective tools U about axes parallel to the rotation axes A of the headstocks 13 and tailstocks 15, i.e., horizontal axes parallel to a first translation axis X and orthogonal to a second translation axis Y, described in greater detail below, along which the tools U can move.

Similarly to the previously described embodiments, the lathe 1 of Figs. 8 to 10 comprises a gantry structure (or in brief gantry) that carries the spindles 31. However, contrary to what has been described with reference to the previous embodiments, in Figs. 8 to 10 the gantry structure 23 is stationary with respect to the bed 9, as the numerically controlled movement along the horizontal translation axis X is imparted to the slide 101 that carries the headstocks 13 and the tailstocks 15.

As in the previously described embodiments, the gantry structure 23 comprises a cross member 23A, which extends above the bed 9 and crosswise thereto, i.e., orthogonally to the lateral faces 9.1 and 9.2, orthogonally to the rotation axes A of the headstocks 13 and tailstocks 15 and positioned above the plane on which the rotation axes A lie.

The gantry structure can also comprise two uprights 23B, which can be alongside the faces 9.1 and 9.2 of the bed 9, engaging with the bed 9 or with the floor, to which the bed 9 is fixed.

In the embodiment of Figs. 8 to 10, the gantry structure 23 carries a carriage or slide 25, which is movable along a second numerically controlled translation axis, represented by the double arrow Y. The second translation axis Y is vertical and orthogonal to the first translation axis X. To allow the movement along the second translation axis Y the carriage 25 can be provided with guides 27, which engage in shoes 29 integral with the gantry structure 23 (and in particular with the cross member 23A), or vice versa.

Spindles 31, to which the tools U can be applied, are carried on the carriage 25. The number of spindles 31 and the number of tools U can be the same as the number of pairs of headstocks 13 and tailstocks 15. In the example illustrated in Figs. 8 to 10 four pairs of headstocks 13 and tailstocks 15 and four spindles 31 are provided. The spindles 31 can be rotated simultaneously by means of motors, in the same or in a different number to the number of spindles 31. In some embodiments, two adjacent pairs of headstocks 13 and tailstocks 15 can rotate in discordant directions.

The spindles 31 can be movable integral with one another, as they are all mounted directly on the carriage 25, so that the numerically controlled movement along the translation axis Y is carried out simultaneously by all the tools U mounted on the spindles 31. This allows a high productivity with a machine having a simple structure, capable of machining a plurality of workpieces P in parallel and simultaneously.

Due to the movements on the numerically controlled translation axes X and Y, the tools U can carry out numerically controlled movements along the axis X to machine each point of the workpieces P held between the headstocks 13 and the tailstocks 15. The numerically controlled movement along the translation axis Y allows the tools U to be moved toward and away from the lateral surface of the workpieces P to be machined held between headstocks 13 and tailstocks 15.

The structure of the lathe of the embodiment illustrated in Figs. 8 to 10 is particularly rigid and is able to withstand high inertial stresses, so that the movements along X and along Y can be carried out at high speeds. In particular, the use of a fixed gantry structure and of a movable slide 101 of limited vertical dimensions makes it possible to avoid deformations resulting from inertial forces that develop when carrying out movements along X and along Y with high accelerations. This allows the lathe 1 to machine the workpieces P with high speed, due to the possibility of performing very high accelerations in the directions X and Y without deformations that cause errors or imprecisions in machining.

In advantageous embodiments, the lathe 1 can comprise a conveyor for removing the chips generated during machining housed in the bed 9 and not shown, similarly to what has been described with reference to the previous embodiments.

In the embodiments described above, the spindles 31 are supported on the carriage 25 with a fixed orientation, i.e., with their rotation axis parallel to the rotation axes A of the headstocks and tailstocks. However, this condition is not essential and in some cases can be limiting. In other embodiments, the spindles 31, and hence the respective tools U, can be oriented about an axis orthogonal to the directions X and Y, i.e., about a horizontal axis extending at 90° with respect to the rotation axes A of the headstocks and tailstocks. This orientation movement can be individual for each spindle, or a single movement for all the spindles; in this second case, the spindles can, for example, be mounted on a supporting member carried by the carriage 25 and orientable about the aforesaid horizontal axis orthogonal to the directions X and Y.

This possibility of controlling and adjusting the orientation of the rotation axes of the spindles 31 makes it possible, for example, to rotate the axes of the spindles 31 counter-clockwise in Fig.1, so that the tools U move toward the workpieces P to be machined. This can be useful, for example, if the tools U are of small diameter, to prevent the workpieces from impacting against parts of the carriage 25 or of the spindles 31 during machining.

Embodiments illustrated in the accompanying drawings have been described. Those skilled in the art will understand that various modifications, omissions and additions can be made with respect to what has been specifically described herein, without departing from the scope of the invention as defined in the appended claims.

## Claims

1. A numerically controlled multi-spindle lathe (1), comprising:
a bed (9) comprising an upper face and two lateral faces (9.1, 9.2);
a plurality of pairs of rotation members (13, 15) adapted to support and rotate workpieces to be machined (P), each pair comprising a headstock (13) and a tailstock (15) coaxial with each other and defining a respective rotation axis (A) of the workpieces to be machined (P); wherein each headstock (13) is motorized; wherein the distance between headstocks and tailstocks is adjustable; and wherein the rotation axes (A) of the pairs of headstocks and tailstocks lie on a horizontal plane;
a gantry structure (23) for supporting a plurality of spindles (31) adapted to rotate, about respective rotation axes of the spindles, respective tools (U), configured to simultaneously machine workpieces mounted between the headstocks (13) and the tailstocks (15); wherein the gantry structure (23) and the pairs of headstocks (13) and tailstocks (15) are provided with a numerically controlled movement with respect to each other by means of first guides (21) along a first translation axis (X) horizontal and parallel to the rotation axes (A) of the pairs of headstocks (13) and tailstocks (15); wherein the gantry structure (23) comprises a pair of uprights (23B and a cross member (23A) extending crosswise to the rotation axes (A) of the headstocks (13) and tailstocks (15) and is positioned above a plane on which said axes (A) lie;
a carriage (25) carrying the spindles (31) and supported by the gantry structure (23); wherein the carriage (25) is movable with a numerically controlled movement with respect to the gantry structure (23), by means of second guides (27), along a second, vertical translation axis (Y).

2. The lathe (1) of claim 1, wherein the spindles (31) are carried by the carriage (25) with rotation axes parallel to one another and substantially parallel to the rotation axes (A) of the headstocks (13) and tailstocks (15).

3. The lathe of claim 1, wherein each spindle (31) are orientable about a horizontal axis, orthogonal to the rotation axes (A) of the headstocks (13) and tailstocks (15), so as to be able to arrange the rotation axes of the spindles (31) parallel or inclined with respect to the horizontal on a vertical plane orthogonal to the plane on which rotation axes (A) of the headstocks (13) and tailstocks (15) lie.

4. The lathe (1) of one or more of the preceding claims, wherein the gantry structure is configured as moving carriage guided on the first guides (21); wherein the first guides (21) are integral with the bed (9), for example integral with the lateral faces (9.1, 9.2) of the bed (9).

5. The lathe (1) of claim 4, wherein the uprights (23B) of the gantry structure are slidingly constrained to the first guides (21).

6. The lathe of claims 1, 2 or 3, wherein: the gantry structure (23) is stationary with respect to the bed and the numerically controlled movement between the gantry structure (23) and the pairs of headstocks (13) and tailstocks (15) is given to the pairs of headstocks (13) and tailstocks (15).

7. The lathe of claim 6, wherein the pairs of headstocks (13) and tailstocks (15) are mounted on a slide (101) movable along the first numerically controlled translation axis (X) with respect to the bed (9) by means of a guide system (102) integral with the bed (9).

8. The lathe of one or more of the preceding claims, wherein the spindles (31) and the pairs of headstocks (13) and tailstocks (15) are configured to carry out numerically controlled movements with respect to each other only along said first horizontal translation axis (X) and said second vertical translation axis (Y).

9. The lathe (1) of one or more of the preceding claims, wherein a conveyor (43) for collecting the chips generated by machining of the workpieces (P) is associated with the bed (9); wherein the conveyor is arranged on the upper face (9.3) of the bed (9) and preferably housed in a cavity (9.4) on said upper face of the bed (9)

10. The lathe (1) of one or more of the preceding claims, wherein the headstocks (13) are provided with motorized members that control a synchronized rotation, in concordant or discordant directions, of the headstocks (13).

11. The lathe (1) of one or more of the preceding claims, wherein the second guides (27) are integral with the carriage (25) and preferably comprise a pair of guides spaced from each other in a direction orthogonal to the first translation axis (X) and to the second translation axis (Y).

12. The lathe (1) of one or more of the preceding claims, wherein the tailstocks (15) or the headstocks (15) are supported by a cross member (17) movable parallel to the first translation axis (X) to adjust the mutual distance between the headstocks (13) and the tailstocks (15); the cross member (17) extends orthogonally to the first translation axis (X) and crosswise to the second translation axis (Y); and the headstocks (13) or the tailstocks (15) are supported by a cross member (5) fixed with respect to the bed (9).

13. The lathe (1) of one or more of the preceding claims, comprising a further carriage (25X) movable integral with the carriage (25) carrying the spindles (31) along the first horizontal translation axis (X); wherein the further carriage (25X) is provided with a numerically controlled movement parallel to a further translation axis (Y1) parallel to the second translation axis (Y) and orthogonal to the first translation axis (X).

14. The lathe (1) of one or more of claims 1 to 12, comprising a further carriage (61) movable with respect to the gantry structure (23) according to a numerically controlled horizontal translation axis orthogonal to the first translation axis (X) and preferably provided with a rotation movement about a numerically controlled rotation axis (C), preferably orthogonal to the first translation axis (X) and to the second translation axis (Y); and wherein said further carriage (1) preferably carries a slide (65) movable vertically according to a numerically controlled translation axis (Y1); wherein the slide (65) preferably carries a plurality of tool-holder spindles (73), with rotation axes preferably parallel to the numerically controlled translation axis (Y1) along which the slide (65) moves.

15. The lathe of one or more of the preceding claims, wherein the number of pairs of headstocks (13) and tailstocks (15) is twice the number of spindles (31) carried by the carriage (25); and wherein the mutual distance between adjacent pairs of headstocks (13) and tailstocks (15) is such as to allow simultaneous machining of two workpieces engaged with said adjacent pairs of headstocks and tailstocks by means of a single tool (U).

16. The lathe of claim 14, wherein the carriage (25) and the pairs of headstocks (13) and tailstocks (15) are movable with respect to each other in a horizontal direction orthogonal to the rotation axes of the headstocks (13) and tailstocks (15), preferably to arrange the axes of the spindles (31) in two distinct relative positions with respect to the rotation axes (A) of the headstocks (13) and tailstocks (15), in a first position each rotation axis of the spindles (31) lying approximately on a vertical plane containing the rotation axis of a corresponding pair of headstocks (13) and tailstocks (15), and in a second position the rotation axis of each spindle (31) being positioned on a vertical plane interposed between the rotation axes (A) of two adjacent pairs of headstocks (13) and tailstocks (15).
